(19) Europäisches Patentamt

European Patent Office

Office européen des brevets

(11) **EP 1 606 223 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **04722253.4**

(22) Anmeldetag: **22.03.2004**

(51) Int Cl.:
*C03B 23/02* (2006.01)   *C03B 19/02* (2006.01)
*H01L 21/20* (2006.01)   *B81C 1/00* (2006.01)

(86) Internationale Anmeldenummer:
**PCT/EP2004/002993**

(87) Internationale Veröffentlichungsnummer:
**WO 2004/085323 (07.10.2004 Gazette 2004/41)**

(54) **VERFAHREN ZUR HERSTELLUNG EINZELNER MIKROLINSEN ODER EINES MIKROLINSENARRAYS**

METHOD FOR PRODUCING INDIVIDUAL MICROLENSES OR A MICROLENS ARRAY

PROCEDE DE PRODUCTION DE DIFFERENTES MICRO-LENTILLES OU MOSAIQUES DE MICRO-LENTILLES

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.03.2003 DE 10313889**

(43) Veröffentlichungstag der Anmeldung:
**21.12.2005 Patentblatt 2005/51**

(73) Patentinhaber: **Fraunhofer-Gesellschaft zur Förderung der angewandten Forschung e.V. 80686 München (DE)**

(72) Erfinder:
• **QUENZER, Hans, Joachim 25524 Itzehoe (DE)**

• **MERZ, Peter 25557 Hanerau-Hademarschen (DE)**
• **BOTT, Uwe 25557 Hanerau-Hademarschen (DE)**

(74) Vertreter: **Rösler, Uwe Rösler Patentanwaltskanzlei Landsberger Strasse 480a 81241 München (DE)**

(56) Entgegenhaltungen:
**DE-A- 19 956 654   DE-C- 10 118 529 US-A- 4 883 524**

**Beschreibung**

**Technisches Gebiet**

Die Erfindung bezieht sich auf ein Verfahren zur Herstellung einzelner Mikrolinsen oder eines Mikrolinsenarrays aus glasartigem Material, bei dem ein erstes Substrat mit einer Vertiefungen aufweisenden Oberfläche bereitgestellt wird, über die ein aus dem glasartigen Material bestehendes zweites Substrat zumindest teilweise überlappend in Deckung gebracht und mit dieser unter Vakuumbedingungen verbunden wird, und bei dem der Substratverbund derart getempert wird, dass das zweite Substrat erweicht und in die Vertiefungen des ersten Substrats hineinfließt, wodurch die dem ersten Substrat abgewandte Seite des zweiten Substrats zur Ausbildung wenigstens einer Mikrolinsenoberfläche strukturiert wird.

Ferner wird ein alternatives Verfahren zur Herstellung einzelner Mikrolinsen oder eines Mikrolinsenarrays aus glasartigem Material beschrieben, bei dem ein erstes Substrat mit einer Vertiefungen aufweisenden Oberfläche bereitgestellt wird, über die ein aus dem glasartigen Material bestehendes zweites Substrat zumindest teilweise überlappend in Deckung gebracht und mit dieser verbunden wird, wobei in den Vertiefungen zwischen dem ersten und dem zweiten Substrat jeweils gasförmiges Medium eingeschlossen wird, und bei dem der Substratverbund derart getempert wird, dass das zweite Substrat erweicht und durch das sich ausdehnende gasförmige Medium jeweils im Bereich der Vertiefungen verdrängt wird, wodurch die dem ersten Substrat abgewandte Seite des zweiten Substrats zur Ausbildung wenigstens einer konvexen Mikrolinsenoberfläche strukturiert wird,

**Stand der Technik**

In der WO 01/38240 A1 ist ein Verfahren zur Herstellung mikromechanischer und insbesondere mikrooptischer Bauelemente aus glasartigen Materialien beschrieben, das Technologien zur Strukturierung von Halbleitersubstraten nutzt, um aus Glas gefertigte Funktionselemente im Mikro- und Submikrometerbereich im Wege des Glasfließprozesses herzustellen. In einem ersten Schritt gilt es Vertiefungen in einer vorzugsweise eben ausgebildeten Halbleitersubstratoberfläche einzubringen, die im Wege bekannter Standardlithographie- und Ätzverfahren gewonnen werden können. Das vorstrukturierte Halbleitersubstrat wird nachfolgend bspw. im Wege anodischen Bondens mit einem aus glasartigem Material bestehenden Flächensubstrat verbunden und nachfolgend über die Erweichungstemperatur des glasartigen Materials erhitzt. Herrscht innerhalb der durch die jeweilige Vertiefung innerhalb des Halbleitermaterials und von dem glasartigen Flächensubstrat eingeschlossenen Kavität Vakuum bzw. Unterdruck vor, so vermögen Teile des erweichten glasartigen Materials in die Kavität zu fließen. Ist hingegen in der Kavität ein gasförmiges Medium, bspw. Luft eingeschlossen, indem bspw. das glasartige Flächensubstrat unter Normaldruckbedingungen mit dem strukturierten Halbleitersubstrat verbunden worden ist, so dehnt sich das in der Kavität befindliche gasförmige Medium durch den Tempervorgang aus und verdrängt das unmittelbar über der Kavität befindliche erweichte glasartige Material.

Im ersteren Fall bildet sich somit innerhalb der, dem Halbleitersubstrat zugewandten Oberfläche des Glassubstrates eine konkav geformte Mikrolinsenstruktur aus, im zweiten Fall hingegen führt der lokale Verdrängungsvorgang zu einer konvex ausgeformten Mikrolinsenstruktur. In beiden Fällen ist die sich einstellende Krümmung der Mikrolinsenoberfläche von der Art und Dauer des Tempervorganges aber insbesondere von der Form und Größe der jeweiligen einzelnen Vertiefungen innerhalb des Halbleitersubstrates abhängig. Mit Hilfe des vorstehend beschriebenen bekannten Verfahrens ist es möglich sphärisch oder elliptisch symmetrische Mikrolinsenoberflächen herzustellen.

Auch aus der US 4,883,524 ist unter Bezugnahme auf die darin dargestellte Figur 6 ein die Linsenform eines Binokularglases bestimmendes Glasfließverfahren zu entnehmen, bei dem durch lokales Abfließen geschmolzenen Glases in eine konkave Vertiefung in einer Brillenglasform der optische Nahteil eines Zweistärkenbrillenglases herstellbar ist.

**Darstellung der Erfindung**

Der Erfindung liegt die Aufgabe zugrunde, ein Verfahren zur Herstellung einzelner Mikrolinsen oder eines Mikrolinsenarrays aus glasartigem Material derart anzugeben, dass die Krümmung der Linsenform nahezu beliebig einstellbar ist. Insbesondere soll es möglich sein, asphärische einzelne Linsen oder Linsenarrays in einer möglichst kostengünstigen Weise zu produzieren.

Die Lösung der der Erfindung zugrunde liegenden Aufgabe wird durch die Merkmale der Ansprüche 1 und 4 gelöst. Den Erfindungsgedanken vorteilhaft weiterbildende Merkmale sind Gegenstand der Unteransprüche sowie der Beschreibung unter Bezugnahme auf die Ausführungsbeispiele zu entnehmen.

Das erfindungsgemäße Verfahren greift grundsätzlich auf die in der WO 01/38240 A1 beschriebene Technologie des Glasfließverfahrens zurück, jedoch wird im Unterschied zu der bekannten Verfahrenstechnologie zur Ausbildung einer Mikrolinsenoberfläche nicht eine einzige Vertiefung pro Mikrolinse innerhalb des Halbleitersubstrats verwendet, sondern wenigstens zwei Vertiefungen vorgesehen, deren Form, Größe und gegenseitige Anordnung bestimmend sind für den formgebenden Prozess, der zur Ausbildung der Mikrolinsenoberfläche an der dem Halbleitersubstrat abgewandten Oberfläche des Glassubstrats führt und sich durch eine lokale Materialverdrängung zur Schaffung konvexer oder einen gezielten, geregelten Materialfluss in die wenigstens zwei im ersten Substrat vorgesehenen Vertiefungen bzw. Kavitäten zur Schaffung konkaver oder auch konvexer Oberflächenkonturen auszeichnet.

In einer ersten Verfahrensvariante wird das aus einem Halbleitermaterial bestehende erste Substrat, das vorzugsweise in Form eines einkristallinen Siliziumwafers vorliegt und nachfolgend als Halbleitersubstrat bezeichnet wird, mit Vertiefungen versehen, die mit Mitteln aus der Halbleitertechnologie in eine der ansonsten plan ausgebildeten Oberseiten des Halbleitersubstrats eingebracht werden. Größe, Form und Anordnung der Vertiefungen richten sich nach der gewünschten Oberflächenkrümmung der herzustellenden Mikrolinsenoberflächen, wie im weiteren näher erläutert wird. Wenigstens zwei Vertiefungen werden derart benachbart in die Oberseite des Halbleitersubstrat eingebracht, dass die Vertiefungen durch einen schmalen Zwischensteg voneinander getrennt bleiben, wobei die Breite des Zwischensteges typischerweise sehr viel kleiner bemessen ist als die kleinste laterale Abmessung innerhalb der beiden benachbarten Vertiefungen.

Unter Vakuumbedingungen wird das vorstrukturierte Halbleitersubstrat mit dem zweiten glasartigen Substrat, im weiteren als Glassubstrat bezeichnet, vorzugsweise im Wege anodischen Bondens innig verbunden, so dass das Glassubstrat die Vertiefungen gasdicht zur Ausbildung von Kavitäten, in denen Vakuumbedingungen vorherrschen, abschließt.

Nachfolgend wird der Substratverbund einem Temperprozess unterzogen, bei dem das glasartige Material erweicht und infolge der in den Kavitäten herrschenden Vakuumbedingungen lokal in die Kavitäten fließt bis sie vorzugsweise vollständig mit erweichtem glasartigen Material ausgefüllt sind.

Durch Vorgabe von Form, Größe und Anordnung der Vertiefungen innerhalb des Halbleitersubstrates ist es möglich die Menge des glasartigen Materials, das in die durch die Vertiefungen gebildeten Kavitäten hineinfließt, exakt vorzuwählen. Durch geeignete Dikkenwahl des Glassubstrates in Abhängigkeit der Geometrievorgaben durch die Vertiefungen führt der in die Kavitäten gerichtete Materialfluss auf der dem Halbleitersubstrat abgewandten Oberfläche des Halbleitersubstrates zu einer lokalen Oberflächenabsenkung, die sich im Bereich in Projektion über den Kavitäten ausbildet. Die lokale Oberflächenabsenkung stellt letztlich eine konkave Oberflächenkontur dar, deren lokale Krümmung sowie Form und Größe die optisch wirksame Oberfläche einer Mikrolinse bestimmt.

Durch entsprechende Kombination von geeignet ausgebildeten und angeordneten Vertiefungen bzw. Kavitäten auf der Halbleitersubstratoberfläche ist bei ebenso geeigneter Dickenwahl des Glassubstrates die reproduzierbare Herstellbarkeit von Mikrolinsen mit einer definierten Oberflächenkrümmung, insbesondere die Herstellung asphärischer einzelner Linsen bzw. Linsenarrays mit verfahrenstechnisch einfachen Mitteln möglich, die zudem kostengünstig realisierbar sind.

Im Anschluss an den vorbeschriebenen Formvorgang wird nach Erkalten des Glassubstrates das Halbleitersubstrat vom Glassubstrat getrennt und mittels Polieren, Schleifen, Sägen oder ähnliche Verfahren werden einzelne Mikrolinsen oder ganze Mikrolinsenarrays erhalten. Der Trennvorgang als solcher läßt sich durch vorheriges Vorsehen einer Trennschicht zwischen dem Halbleitersubstrat und dem Glassubstrat vereinfachen, bspw. durch Vorsehen von Metall-, Graphit- oder ähnlichen Trennschichten. Die einfachste Methode zur Trennung von Halbleitersubstrat und Glassubstrat ist jedoch nach wie vor die nasschemische Auflösung des Halbleitersubstrates selbst.

Das erfindungsgemäße Verfahren ermöglicht nicht nur, wie vorstehend beschrieben, die Herstellung konkav geformter Mikrolinsenoberflächen, sondern ebenso die Ausbildung konvexer Mikrolinsenoberflächen. Hierfür stehen grundsätzlich zwei alternative Verfahrensvarianten zur Verfügung, die sich im Wesentlichen dadurch unterscheiden, ob in den Kavitäten vor dem Tempervorgang Vakuum- oder Nomaldruckbedingungen vorherrschen.

Wird wie vorstehend beschrieben, das Verbinden des Halbleitersubstrates mit dem Glassubstrat unter Vakuumbedingungen durchgeführt, so sind in die Halbleitersubstratoberfläche wenigstens zwei Vertiefungen bzw. Kavitäten einzubringen, die durch einen sogenannten Zwischenstegbereich voneinander getrennt werden. Der Zwischenstegbereich erhebt sich stempel- oder inselartig zwischen den wenigstens zwei Vertiefungen, die getrennt voneinander angeordnet sind oder den Zwischenstegbereich vollständig umgebend in Form eines durchgehenden "Grabens" ausgebildet sein können. Die laterale Erstreckung des Zwischenstegbereiches ist um ein Vielfaches größer ausgebildet als der vorstehend beschriebene Zwischensteg. Einen genaueren Eindruck über die Anordnung des Zwischenstegbereiches relativ zu den benachbarten Vertiefungen erhält man insbesondere aus den nachstehenden Ausführungsbeispielen.

Durch anodisches Bonden eines derart vorstrukturierten Halbleitersubstrates mit einem Glassubstrats und anschließendem Tempern über die Erweichungstemperatur des glasartigen Materials beginnt das erweichte glasartige Material über dem Zwischenstegbereich beidseitig in die vorgesehenen benachbarten Vertiefungen abzufließen, wodurch sich über dem Zwischenstegbereich an der dem Halbleitersubstrat abgewandten Glassubstratoberfläche eine konvex ausgebildete Oberflächenkontur ergibt. Das Krümmungsverhalten der konvexen Form sowie deren Gestalt und Größe sind durch Form, Größe und Anordnung der Vertiefungen um den entsprechenden Zwischenstegbereich sowie dessen Dimensionierung exakt vorgebbar. Weitere Einzelheiten zu dieser beschriebenen Verfahrensvariante sind im Weiteren den Ausführungen unter Bezugnahme auf das Ausführungsbeispiel entnehmbar.

Die zweite Verfahrensalternative zur Herstellung konvex ausgebildeter Linsenoberflächen sieht ein Verbinden des Halbleitersubstrats mit dem Glassubstrat unter Normaldruckbedingungen vor, so dass innerhalb der durch die Vertiefungen vorgegebenen Kavitäten gasförmiges Medium, bspw. Luft eingeschlossen ist, das sich bei Erwärmen ausdehnt. Durch die temperaturbedingte Ausdehnung des gasförmigen Mediums innerhalb der Kavitäten wird das unmittelbar über den Kavitäten erweichte Glasmaterial lokal verdrängt, so dass sich auf der dem Halbleitersubstrat abgewandten Oberfläche des Glassubstrats konvex ausgebildete Auswölbungen ergeben, deren Krümmung in gleicher Weise durch Form, Größe und Anordnung der auf dem Halbleitersubstrat angebrachten Kavitäten/Vertiefungen vorgebbar sind.

Neben der sich im Wege des vorbeschriebenen Formvorganges ausbildenden Oberflächenkrümmung auf der der dem Halbleitersubstrat abgewandten Oberseite des Glassubstrates sind auch die laterale Erstreckung sowie die Umfangskontur der sich auf der Oberseite des Glassubstrats ausbildende Mikrolinse durch Form, Größe und Anordnung der Vertiefungen bzw. Kavitäten innerhalb des Halbleitersubstrates vorgebbar.

Unabhängig von den vorstehend beschriebenen Verfahrensvarianten zur Herstellung konvex oder konkav ausgebildeter Oberflächenkonturen ist es für eine präzise Begrenzung bzw. Vorgabe des Umfangsrandes der sich ausbildenden Mikrolinse besonders vorteilhaft, auf der Oberseite des Glassubstrates, die dem strukturierten Halbleitersubstrat abgewandt ist, ein weiteres Halbleitersubstrat zu plazieren, das entsprechend einer gewünschten Umfangsrandgeometrie der herzustellenden Mikrolinsen angepasste Ausnehmungen, vorzugsweise in Form von Öffnungen vorsieht. Die Öffnungen innerhalb des weiteren Halbleitersubstrates werden entsprechend der Anordnung der Vertiefungen im ersten Halbleitersubstrat gegenüberliegend justiert bevor das zweite Halbleitersubstrat mit der Oberfläche des Glassubstrates im Wege des anodischen Bondens verbunden wird.

Die ansonsten flächige Verbindung zwischen dem Glassubstrat und dem weiteren Halbleitersubstrat bleibt auch während des Tempervorganges erhalten, der zum Erweichen des Glassubstrates führt.

Im Falle einer konvexen sowie auch einer sich konkav ausbildenden Mikrolinsenoberfläche bleibt der die Mikrolinsenoberfläche umlaufende Begrenzungsrand, der durch die Öffnung im weiteren Halbleitersubstrat vorgegeben ist, in seiner linienhaften Natur unbeeinflusst. Auf diese Weise ist es möglich, den Umfangsrand der sich ausbildenden Mikrolinse präzise vorzugeben.

Wie vorstehend erwähnt, ermöglicht das erfindungsgemäße Verfahren die Herstellung von Mikrolinsen mit nahezu beliebig gekrümmten Linsenoberflächen, vorzugsweise asphärische Linsenoberflächen mit Dimensionen zwischen wenigen Mikrometern bis hin zu 1 mm und mehr. Derartige Linsen können nahezu beliebige Umfangskonturen aufweisen, vorzugsweise kreisrunde oder rechteckige Linsenformen besitzen.

Neben der Herstellung einzelner Mikrolinsen eignet sich das erfindungsgemäße Verfahren jedoch auch zur Herstellung arrayförmig angeordneter Linsen, wie sie insbesondere in der Mikrosystemtechnik bspw. zur optischen Abbildung auf CCD-Arrayanordnungen Verwendung finden.

Nach Vollendung des vorstehend beschriebenen Tempervorganges mit entsprechend anschließender Abkühlung zur Verfestigung des Glassubstrates können die Halbleitersubstrate bspw. im Wege an sich bekannter Ätzverfahren beidseitig von den Oberflächen des Glassubstrates entfernt werden. Alternative Techniken, wie bspw. Abschleifen sind ebenfalls einsetzbar. Insbesondere gilt es das Halbleitersubstrat mit den glasgefüllten Vertiefungen zur Schaffung einer ebenen Oberfläche von dem Glassubstrat abzutrennen. Je nach Einsatzzweck können die auf die vorstehend beschriebene Weise hergestellten Mikrolinsen bzw. Mikrolinsenarrays durch Schneid- oder Schleifvorgänge vereinzelt oder in arrayförmiger Anordnung selektiert werden.

## Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

Fig. 1      Prozessschritte zur Herstellung einer konkav ausgeformten Mikrolinse,

Fig. 2a, b      perspektivische Darstellung zur Strukturierung geeigneter Halbleitersubstrate zur Herstellung einer konvexen runden Linse (a) sowie zylinderförmiger Rechteckslinse (b),

Fig. 3      Verfahrensvariante zum Verfahren gemäß Figur 1,

Fig. 4a, b      Prozessschritte zur Herstellung einer konvex ausgebildeten Mikrolinse,

Fig. 5      perspektivische Darstellung einer Schichtanordnung zur Herstellung einer konvex ausgebildeten Mikrolinse,

Fig. 6      Prozessschrittdarstellung zur Herstellung einer konvex geformten Mikrolinse mittels Materialverdrängung sowie

Fig. 7      Verfahrensvariante zur Herstellung einer konvex ausgebildeten Mikrolinse zum Verfahrensschritt gemäß Figur 4.

## Wege zur Ausführung der Erfindung, gewerbliche Verwendbarkeit

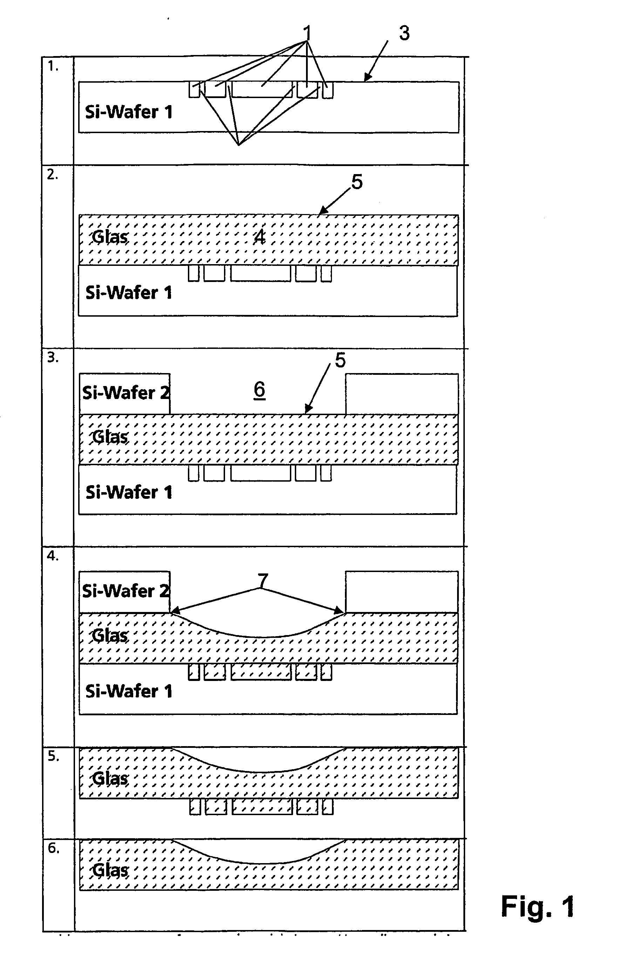

In Figur 1 sind sechs Verfahrensschritte dargestellt, mit denen die Herstellung einer Mikrolinse mit konkaver Linsenoberfläche möglich ist. In einem ersten Verfahrensschritt gilt es ein aus einem Halbleitermaterial bestehendes Grundsubstrat, das vorzugsweise aus einkristallinem Silizium besteht und im Folgenden als Siliziumwafer 1 bezeichnet wird, mit Strukturen in Form von Vertiefungen 1 zu versehen, die bspw. im Wege eines Ätzverfahrens, wie Trockenätzen, in die Oberfläche des Siliziumwafers 1 einbringbar sind. Wie im Weiteren noch im Einzelnen noch hervorgeht, ist die Form, Größe und Anordnung der Vertiefungen 1 von entscheidender Bedeutung für die sich letztlich ausbildende Oberflächenkrümmung und Form der Mikrolinse. Die im Ausführungsbeispiel gemäß Figur 1 in die Oberfläche des Siliziumwafers 1 eingebrachten Vertiefungen 1 weisen eine mittige, breite Vertiefung auf, an die sich beidseitig weitere Vertiefungen mit jeweils kleiner werdenden lateralen Abständen anschließen. Jede einzelne Vertiefung ist durch einen schmalen Zwischensteg 2 von der benachbarten Vertiefung abgegrenzt. Je nach der herzustellenden Krümmung der Linsenoberfläche können Form, Größe und Anordnung der einzelnen Vertiefungen 1 von den in Figur 1 dargestellten Vertiefungen abweichen.

Die mit den Vertiefungen 1 versehene Oberfläche 3 des Silizium-Wafers 1 wird in einem nachfolgenden Verfahrensschritt mit einem aus glasartigem Material bestehenden Substrat, bspw. ein aus Pyrexglas oder Borofloatglas bestehender Glaswafer 4 unter Vakuumbedingungen im Wege anodischen Bondens verbunden. Selbstverständlich können auch alternative Verbindungstechniken, wie bspw. Klebetechniken für das Zusammenfügen des Glaswafers 4 mit dem Silizium-Wafer 1 eingesetzt werden, sofern die eingesetzte Verbindungstechnik den erforderlichen hohen Prozesstemperaturen widersteht.

Die dem Silizium-Wafer 1 abgewandte Oberseite 5 des Glaswafers 4 wird mit einem weiteren Siliziumwafer 2 verbunden, vorzugsweise ebenfalls unter Anwendung anodischen Bondens, wobei der Silizium-Wafer 2 eine Ausnehmung 6 aufweist, deren Form und Größe an die Anordnung der Vertiefungen 1 innerhalb des Silizium-Wafers 1 angepasst ist und diesem gegenüberliegend auf der Oberseite 5 des Glaswafers 4 entsprechend ausgerichtet wird.

Bei einem anschließenden Temperprozess, der im Verfahrensschritt 4 dargestellt ist, erweicht das glasartige Material des Glaswafers 4 und fließt in die durch die Vertiefungen 1 vorgegebenen Kavitäten innerhalb des Silizium-Wafers 1 hinein und füllt diese wie im Verfahrensschritt 4 angegeben, vollständig aus. Der Fließprozess des erweichten glasartigen Materials in die durch die Vertiefungen 1 vorgegebenen Kavitäten wird durch das in den Kavitäten vorherrschende Vakuum unterstützt. Durch die Form, Größe und Anordnung der Kavitäten innerhalb des Silizium-Wafers 1 kann die Glasmenge, die in die Kavitäten einfließt gezielt eingestellt werden. Bei entsprechender Dickenwahl des Glaswafers 4 zeigt sich durch den vorstehend beschriebenen Fließvorgang des glasartigen Materials in die Kavitäten eine auf der Oberseite 5 des Glaswafers 4 lokale Materialabsenkung, die sich exakt innerhalb der Öffnung 6 des Silizium-Wafers 2 ausbildet. Der durch die Öffnung 6 innerhalb des Silizium-Wafers 2 vorgegebene, linienhafte Begrenzungsrand 7 ist geometriebestimmend für die sich ausbildende Mikrolinse, deren Oberfläche durch den im Verfahrensschritt 4 gemäß Figur 1 dargestellten und beschriebenen Materialabsenkvorgang des erweichten glasartigen Materials gebildet wird.

Neben dem ohnehin innerhalb der Kavitäten eingeschlossenen Vakuum kann der Materialabsenkvorgang innerhalb des erweichten glasartigen Materials durch einen unter Normaldruckbedingungen, vorzugsweise 1 bar, durchgeführten Tempervorgang unterstützt werden, so dass die durch die Vertiefungen 1 vorgegebenen Kavitäten vollständig mit dem entsprechend erweichten Glasmaterial ausgefüllt werden. Hierdurch ist es möglich, das Gesamtvolumen des in die Kavitäten eingeflossenen Glasmaterials durch die Volumenvorgabe der Vertiefungen 1 exakt vorauszubestimmen, um letztlich eine bestimmte Krümmung an der Oberseite 5 des Glassubstrates 4 im Wege der Materialabsenkung zu erhalten. Die durch die Vertiefungen 1 definierten Kavitäten dürfen jedoch eine maximale Größe bzw. Ausdehnung nicht überschreiten, wobei deren Geometrie und Anordnung letztlich auch von der gewählten Dicke des Glaswafers 4 abhängen. So ergeben sich je nach Ausprägung der Vertiefungen 1, je nach Wahl der Dicke und Dichte des Glasmaterials des Glaswafers 4 sowie je nach Wahl der Temperbedingungen die unterschiedlichsten Fließverhalten sowie die sich hierdurch ergebenden Krümmungen und Formen an der Glasoberfläche 5 des Glaswafers 4.

Im Anschluss an den im Wege des Tempervorganges hervorgerufenen Formvorgang und nachfolgendem Erkalten des Glasmaterials werden die Silizium-Wafer 1 und 2 vom Glassubstrat 4 entfernt. Im einfachsten Fall erfolgt dies im Wege nasschemischen Ätzens. Schließlich gilt es die Unterseite des Glaswafers einzuebnen, bspw. im Wege eines Abschleifvorganges und nachfolgenden Polierens der Oberfläche. Siehe hierzu die Verfahrensschritte fünf und sechs in Figur 1.

Auch ist es möglich zwischen den Oberflächen des Glassubstrates 4 und den Silizium-Wafern 1 und 2 entsprechende Trennschichten vorzusehen, bspw. bei niedrigen Temperaturen schmelzende Metalle oder eine Graphitschicht, wodurch ein Abtrennen der Siliziumwafer von den Oberflächen des Glassubstrates 4 auch unter Vermeidung herkömmlicher Ätztechniken durchführbar ist.

Das unter Bezugnahme auf Figur 1 dargestellte Verfahren ermöglicht die Herstellung von Mikrolinsen mit definierten konkav ausgebildeten Oberflächenkrümmungen mit einem sehr hohen Grad an Reproduzierbarkeit.

Zur Herstellung flächig verteilter Linsenarrays gilt es den Siliziumwafer 1 arrayförmig mit den jeweils zur Ausbildung der gewünschten Mikrolinsen erforderlichen Vertiefungen 1 vorzustrukturieren. Die Prozessschritte zur Herstellung geeigneter Linsenarrays entsprechen nach geeigneter Vorstrukturierung den Verfahrensschritten 2 bis 6 gemäß der vorstehenden beschrieben Figur 1.

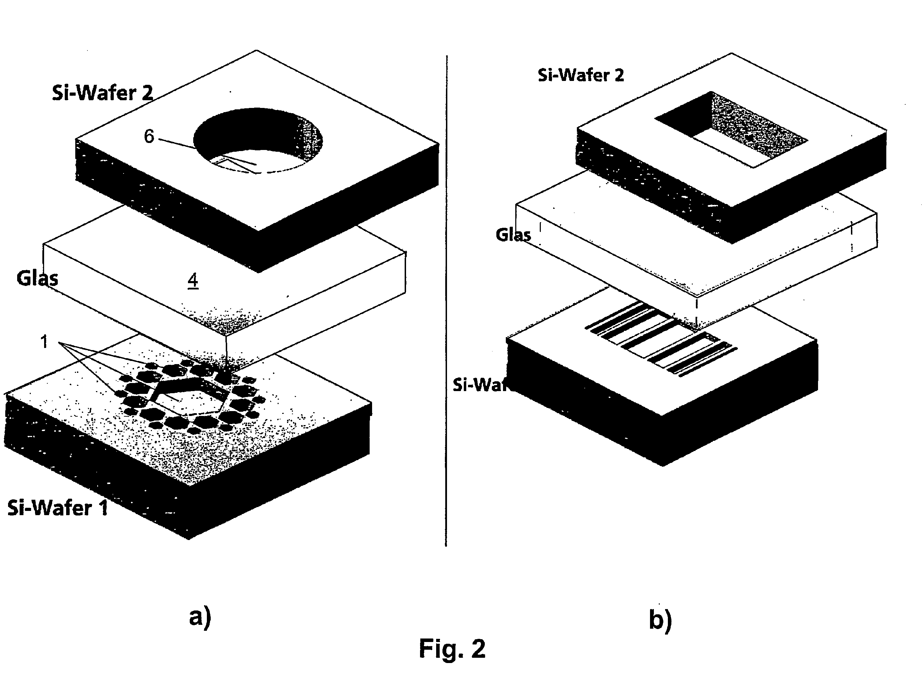

In den Figuren 2a und b ist jeweils eine dreidimensionale Schichtstrukturdarstellung gezeigt, die grundsätzlich zu dem in Figur 1 dargestellten Verfahrensablauf korrespondiert. Figur 2a zeigt zur Herstellung einer runden Mikrolinse einen Silizium-Wafer 1, dessen Oberfläche eine Vielzahl in Form sechseckiger prismatischer Vertiefungen 1 vorsieht, die symmetrisch zueinander angeordnet sind. Um die mittig am größten ausgebildete sechseckige Vertiefung ist ringförmig eine Vielzahl kleiner dimensionierter sechseckig ausgebildeter Vertiefungen angeordnet, die ihrerseits wiederum von noch kleineren Sechseckvertiefungen umgeben sind. Selbstverständlich ist es möglich je nach dem Krümmungsverhalten der herzustellenden Mikrolinse Vertiefungen unterschiedlicher Formen, Geometrien und Anordnung zu wählen, so dass der in Figur 2a dargestellte, strukturierte Silizium-Wafer 1 lediglich als konkretes Fallbeispiel dient. Über den vorstrukturierten Silizium-Wafer 1 ist ein Glaswafer 4 vorgesehen, über den wiederum ein mit einer Öffnung 6 versehener Silizium-Wafer 2 dargestellt ist. Die Öffnung 6 definiert den kreisrunden Rand der sich im Wege des Temperverfahrens ergebenden Mikrolinsenoberfläche wie insbesondere aus der vorstehenden Beschreibung unter Bezugnahme auf Figur 1 Prozessschritt 4 hervorgeht.

Ferner ist es möglich mit Hilfe des erfindungsgemäßen Verfahrens Mikrolinsen mit einer von der kreisrunden Form abweichenden Begrenzungsumrandung herzustellen, wie es bspw. bei zylindrischen Linsen der Fall ist. Hierzu weist der in Figur 2b dargestellte Siliziumwafer 1 eine Vielzahl rechteckförmig ausgebildeter Vertiefungen 1 auf, die in der in Figur 2b dargestellten Weise nebeneinander, jeweils getrennt durch Zwischenstege, angeordnet sind. An die durch den strukturierten Silizium-Wafer 1 vorgegebene Gesamtgrundform angepasst, sieht der Silizium-Wafer 2 eine entsprechende rechteckförmige Öffnung vor, die ihrerseits wiederum den Begrenzungsrand der sich im Wege des Tempervorgangs ausbildende Mikrolinsenoberfläche bestimmt.

Die in den Figuren 2a und b dargestellten Strukturierungsmöglichkeiten der Substratoberfläche des Siliziumwafers 1 stellen lediglich repräsentative Fallbeispiele für die Ausbildung kreisrunder oder rechteckig geformter Mikrolinsen dar und lassen grundsätzlich darauf schließen, dass mit Hilfe des erfindungsgemäßen Verfahrens nahezu beliebig geformte Mikrolinsen herstellbar sind.

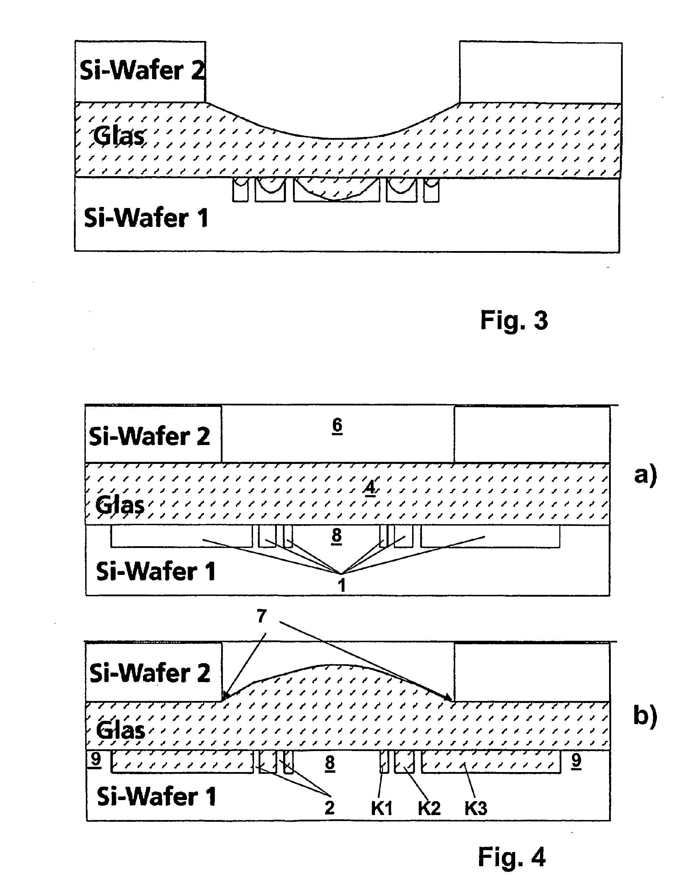

Figur 3 zeigt eine Verfahrensvariante zu dem in Figur 1 Prozessschritt 4 dargestellten Verfahrensschritt. Im Gegensatz zu Figur 1 werden die durch die Vertiefungen 1 dargestellten Kavitäten nur partiell mit dem erweichten Material gefüllt. Eine derartige Verfahrensvariante eignet sich insbesondere in Fällen, in denen der Tempervorgang durch zeitabhängige Temperatursteuerung überwacht wird, wodurch die sich lokal an der Oberfläche 6 des Glassubstrates 4 ausbildende Linsenoberfläche in ihrem Krümmungsverhalten überwacht und entsprechend eingestellt werden kann.

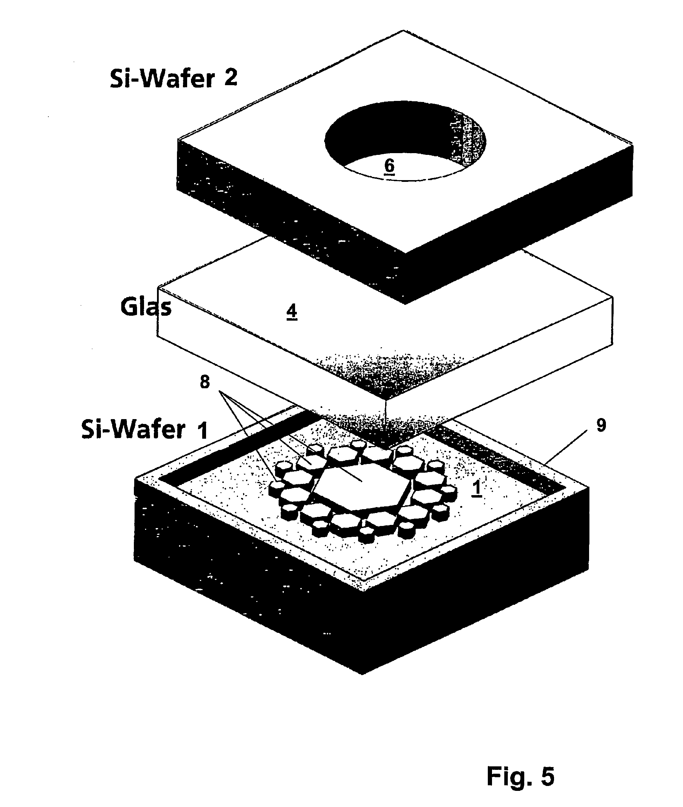

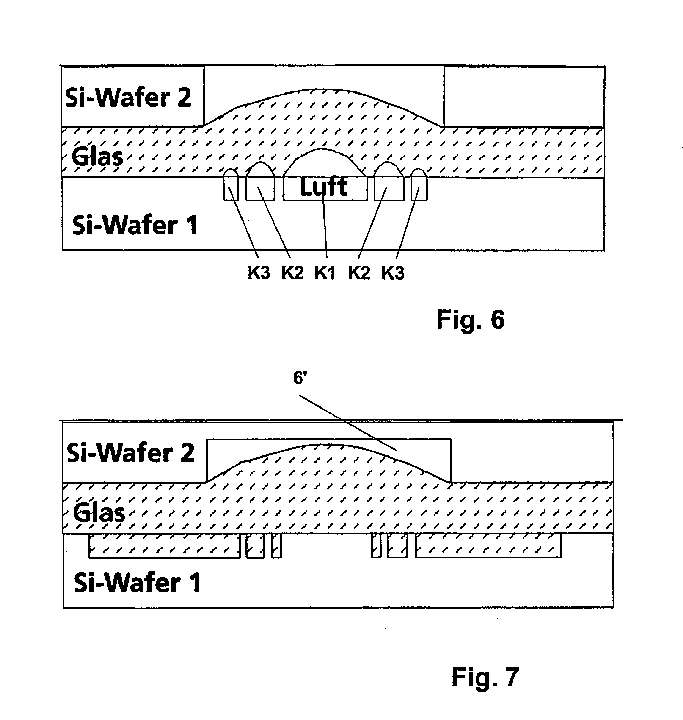

Die zu den vorstehenden Figuren beschriebene Verfahrenssituation erlaubt die Herstellung von konkav gekrümmten Mikrolinsenoberflächen. Um konvexe Mikrolinsenoberflächen zu erzeugen stehen grundsätzlich zwei Wege zur Verfügung, wovon der erste in den Figuren 4 und 5 und der zweite unter Bezugnahme auf Figur 6 beschrieben wird.

In Figur 4a ist eine im Querschnitt dargestellte Verbindungsstruktur bestehend aus dem Silizium-Wafer 1, dem Glassubstrat 4 sowie dem Silizium-Wafer 2 dargestellt. Von entscheidender Bedeutung für den weiteren Verfahrensschritt ist die Strukturierung des Silizium-Wafers 1, d. h. die Anordnungen von Vertiefungen 1 auf der Oberfläche des Silizium-Wafers 1, in die bei dem anschließenden Temperprozess erweichtes glasartiges Material zur Ausbildung einer einzigen konvex ausgebildeten Mikrolinsenoberfläche hineinfließt. Der strukturierte Siliziumwafer 1 weist einen Zwischenstegbereich 8 auf, der beidseitig von einer Reihe sich an den Zwischenstegbereich 8 anschließenden Vertiefungen 1 begrenzt wird. Die einzelnen Vertiefungen 1 sind jeweils durch Zwischenstege 2, deren laterale Bemessungen sehr viel kleiner sind als die laterale Erstreckung des Zwischenstegbereiches 8, voneinander getrennt. In dem dargestellten Beispiel schließen sich an den Zwischenstegbereich 8 beidseitig jeweils drei durch Vertiefungen vorgegebene Kavitäten K1, K2 und K3 an, wobei die Kavitäten K3 die größte laterale Breite aufweisen und somit das jeweils größte Volumen zur Aufnahme des im erweichten Zustand fließbaren glasartigen Materials bieten. Bei dem in Figur 4 dargestellten Schichtaufbau wird gleichsam dem Verfahrensschritt 2 in Figur 1 unterstellt, dass die Verbindung zwischen dem Glassubstrat und dem Silizium-Wafer 1 unter Vakuumbedingungen durchgeführt worden ist, so dass in den Kavitäten K1, K2, K3 Vakuumbedingungen vorherrschen. Ein die Kavitäten K3 jeweils beidseitig umgebender Dichtrand 9 sorgt dafür, dass die Unterdruckverhältnisse auch in den Kavitäten K3 während des Tempervorganges erhalten bleiben.

Die in dem Silizium-Wafer 2 eingebrachte Öffnung 6 wird vorzugsweise symmetrisch über dem Zwischenstegbereich 8 positioniert, so dass der durch die Öffnung 6 vorgegebene Begrenzungsrand 7 in Projektion über den Kavitäten des Silizium-Wafers 1 liegt.

Fig. 4b stellt das Ergebnis der Substratschichtung nach durchgeführtem Tempervorganges dar, bei dem die Kavitäten K1 - K3 vollständig mit glasartigem Material ausgefüllt sind. Zudem hat sich der Silizium-Wafer 2 gegenüber dem Silizium-Wafer 1 in Folge des Materialflusses in die Kavitäten gesenkt, wobei sich im Bereich der Öffnung 6 eine konvex geformte Oberflächenkontur als Mikrolinsenoberfläche ausbildet. Diese stellt sich letztlich durch das gezielte Vorsehen des mittig zur Öffnung 6 angeordneten Zwischenstegbereichs 8 ein, der ein Absinken von erweichtem glasartigem Material verhindert. Vielmehr findet ein seitliches Abfließen von erweichtem glasartigen Material in die Kavitäten K1 - K3 statt, die benachbart zum Zwischenstegbereich 8 angeordnet sind.

In Figur 5 ist eine perspektivische Darstellung der für eine erfolgreiche Durchführung des vorstehen beschriebenen Verfahrens zur Herstellung konvexer Mikrolinsenoberflächen erforderlichen Wafer gezeigt. So weist der Silizium-Wafer 1 eine umlaufende stegartig ausgebildete Umrandung 9 auf, die, wie vorstehend zu Figur 4 beschrieben wurde, zur Aufrechterhaltung der Vakuumbedingungen dient. Innerhalb der umlaufenden Umrandung 9 sind verschieden dimensionierte Zwischenstegbereiche 8 vorgesehen, die in ihrer Gesamtheit zur Ausbildung einer konvex ausgebildeten Mikrolinsenoberfläche dienen. Die verschieden groß dimensionierten Zwischenstegbereiche 8 erheben sich im gezeigten Ausführungsbeispiel stempel- oder inselartig vom Boden der von der Umrandung 9 umschlossenen Vertiefung. In Figur 5 ist die Vertiefung im Grunde eine großflächige, rechteckförmige Ausnehmung in der Oberfläche des Silizium-Wafers 1, die von der Umrandung 9 umgeben ist und in deren Innenbereich einzelne Inseln emporragen.

Der Glaswafer 4 wird unter Vakuumbedingungen im Wege anodischen Bondens mit dem vorstrukturierten Silizium-Wafer 1 verbunden, in gleicher Weise erfolgt eine innige Verbindung des mit einer Öffnung 6 versehenen Silizium-Wafers 2 mit der Oberfläche des Glassubstrates 4, wobei die Öffnung 6 mittig über die Zwischenstegbereiche 8 des Siliziumwafers 1 angeordnet wird.

Das sich im Wege des Tempervorganges erweichende glasartige Material des Glassubstrates 4 fließt in die durch die Zwischenstegbereiche 8 befindlichen Zwischenbereiche hinein, wodurch letztlich eine sich innerhalb der Öffnung 6 an der Oberfläche 5 des Glassubstrates 4 konvex ausgeformte Oberflächenkontur ergibt.

Eine andere Möglichkeit zur Ausbildung konvexer Mikrolinsenoberflächen ist in Figur 6 beschrieben. Ausgangspunkt ist gleichsam dem Verfahrensschritt 1 unter Bezugnahme auf Figur 1, dem Vorsehen eines vorstrukturierten Silizium-Wafers 1 mit darin eingebrachten Vertiefungen 1. Im Unterschied zum Verfahren gemäß Figur 1 erfolgt das anodische Bonden des Glaswafers 4 mit dem Silizium-Wafer 1 nicht unter Vakuum, sondern unter Normaldruckbedingungen, so dass es innerhalb der durch die Vertiefungen 1 gebildeten Kavitäten K1, K2, K3 zu einem Gaseinschluss, vorzugsweise in Form von Luft kommt, die sich bei Erwärmung ausdehnt. Im nachfolgenden Tempervorgang, der dem in Figur 6 dargestellten Bild entspricht, erweicht das glasartige Material, wobei sich gleichzeitig die sich innerhalb der Kavitäten K1, K2, K3 vorhandene Luft ausdehnt. Hierdurch kommt es zu einem Verdrängungsvorgang, der in Figur 6 dargestellt ist. Je nach Größe der Kavitäten wird entsprechend dem Luftanteil über den Kavitäten glasartiges Material nach oben zur Ausbildung einer konvex ausgeformten Linsenoberfläche verdrängt. Je nach Wahl der Größe und Anordnung der Kavitäten K1, K2, K3 relativ zur Öffnung 6 des Silizium-Wafers 2 können somit nahezu beliebig geformte konvexe Linsenoberflächenkrümmungen geschaffen werden.

Schließlich ist in Figur 7 eine alternative Ausführungsform zur Ausbildung des Silizium-Wafers 2 gezeigt, der im Unterschied zu den vorstehenden Ausführungsformen keine durchgehende Öffnung 6, sondern lediglich eine Vertiefung 6' vorsieht, die mit der Oberfläche 5 des Glassubstrats 4 ein Volumen Raum einschließt. Innerhalb des Volumens können bspw. zur weiteren Beeinflussung der Linsenoberfläche bestimmte Druckniveaus eingestellt werden.

Mit Hilfe des erfindungsgemäßen Verfahrens ist es möglich, beliebig asphärische Linsenoberflächen, sei es konvex oder konkav ausgebildete Mikrolinsenoberflächen reproduzierbar herzustellen. Die beschriebenen Verfahrensvarianten lassen sich aufgrund einfach durchzuführender Prozessschritte kostengünstig realisieren, wodurch die Herstellung derartiger Mikrolinsen oder Mikrolinsenarrays äußerst kostengünstig möglich ist.

Schließlich sei an dieser Stelle erwähnt, dass das erfindungsgemäße Verfahren ebenso erfolgreich zur Herstellung von Mikrolinsen oder Mikrolinsenarrays anwendbar ist, die aus Kunststoffpolymeren bestehen. Der Begriff glasartiges Material soll dahingehend verstanden sein, dass das Material über eine Materialerweichungstemperatur verfügt, bei der das Material in einen viskos fließfähigen Zustand übergeht.

In einer besonderen weiteren Ausführungsvariante lassen sich die mit dem vorstehenden Verfahren gewonnenen Mikrolinsen bzw. Mikrolinsenarrays als Replikationsstrukturen bzw. Masterformen zur Herstellung von Mikrolinsen bzw. Mikrolinsenarrays mit exakt vorbestimmten Linsenoberflächen bspw. im Rahmen eines Abformvorganges verwenden. Ferner ist es möglich die erhaltenen Linsenoberflächenkonturen im Wege galvanischen Abformens auf widerstandsfähigere Matrizensubstrates, bspw. Ni-Matrizen, übertragen, die für die weitere Replikation von Mikrolinsenformen dienen.

**Bezugszeichenliste**

1  Vertiefungen
2  Zwischenstege
3  Oberfläche des Siliziumwafers
4  Glassubstrat
5  Oberfläche des Glassubstrates
6  Öffnung
7  Begrenzungsrand
8  Zwischenstegbereich
9  Umlaufender Rand

**Patentansprüche**

**1.** Verfahren zur Herstellung einzelner Mikrolinsen oder eines Mikrolinsenarrays aus glasartigem Material, bei dem ein erstes Substrat mit einer Vertiefungen aufweisenden Oberfläche bereitgestellt wird, über die ein aus dem glasartigen Material bestehendes zweites Substrat zumindest teilweise überlappend in Deckung gebracht und mit dieser unter Vakuumbedingungen verbunden wird, und bei dem der Substratverbund derart getempert wird, dass das zweite Substrat erweicht und in die Vertiefungen des ersten Substrats hineinfließt, wodurch die dem ersten Substrat abgewandte Seite des zweiten Substrats zur Ausbildung wenigstens einer Mikrolinsenoberfläche strukturiert wird,
**dadurch gekennzeichnet, dass** zur Ausbildung der wenigstens einen Mikrolinsenoberfläche das erweichte glasartige Material des zweiten Substrates in wenigstens zwei Vertiefungen des ersten Substrates hineinfließt, deren Form, Größe und Anordnung die Krümmung der sich ausbildenden Mikrolinsenoberfläche bestimmen.

2. Verfahren nach Anspruch 1,
**dadurch gekennzeichnet, dass** ein erstes Substrat bereitgestellt wird, das eine erste Vertiefung vorsieht, in die das erweichte glasartige Material während des Temperns zur Ausbildung einer konkaven Oberflächenkontur an der dem ersten Substrat gegenüberliegenden Mikrolinsenoberfläche hineinfließt, und dass getrennt durch einen Zwischensteg neben der ersten Vertiefung wenigstens eine zweite Vertiefung im ersten Substrat vorgesehen ist, in die zur Ausbildung einer vorgebbaren Krümmung der Mikrolinsenoberfläche wenigstens in einem Teilbereich der konkaven Oberflächenkontur eine durch Form, Größe und Anordnung der zweiten Vertiefung bestimmbare Menge an erweichtem glasartigen Material hineinfließt.

3. Verfahren nach Anspruch 1,
**dadurch gekennzeichnet, dass** ein erstes Substrat bereitgestellt wird, das wenigstens zwei Vertiefungen vorsieht, die durch einen Zwischenstegbereich getrennt werden, über dem sich durch seitliches Abfließen des erweichten Materials während des Temperns in die wenigstens zwei Vertiefungen eine konvexe Oberflächenkontur an der dem ersten Substrat gegenüberliegenden Mikrolinsenoberfläche ausbildet.

4. Verfahren zur Herstellung einzelner Mikrolinsen oder eines Mikrolinsenarrays aus glasartigem Material, bei dem ein erstes Substrat mit einer Vertiefungen aufweisenden Oberfläche bereitgestellt wird, über die ein aus dem glasartigen Material bestehendes zweites Substrat zumindest teilweise überlappend in Deckung gebracht und mit dieser verbunden wird, wobei in den Vertiefungen zwischen dem ersten und dem zweiten Substrat jeweils gasförmiges Medium eingeschlossen wird, und bei dem der Substratverbund derart getempert wird, dass das zweite Substrat erweicht und durch das sich ausdehnende gasförmige Medium jeweils im Bereich der Vertiefungen verdrängt wird, wodurch die dem ersten Substrat abgewandte Seite des zweiten Substrats zur Ausbildung wenigstens einer konvexen Mikrolinsenoberfläche strukturiert wird,
**dadurch gekennzeichnet, dass** ein erstes Substrat bereitgestellt wird, das eine erste Vertiefung vorsieht, die mit dem zweiten Substrat eine erste Kavität einschließt, in der gasförmiges Medium eingeschlossen ist, das sich während des Temperns ausdehnt und das erweichte glasartige Material zur Ausbildung einer konvexen Oberflächenkontur an der dem ersten Substrat gegenüberliegenden Mikrolinsenoberfläche verdrängt, und
dass getrennt durch einen Zwischensteg neben der ersten Vertiefung wenigstens eine zweite Vertiefung auf dem ersten Substrat vorgesehen ist, die mit dem zweiten Substrat eine zweite Kavität einschließt, in der gasförmiges Medium eingeschlossen ist, die sich während des Temperns ausdehnt und das erweichte glasartige Material zur Ausbildung einer vorgebbaren Krümmung der Mikrolinsenoberfläche wenigstens in einem Teilbereich der konvexen Oberflächenkontur verdrängt.

5. Verfahren nach Anspruch 4,
**dadurch gekennzeichnet, dass** das Verbinden des zweiten mit dem ersten Substrat unter Normal- oder Überdruckbedingungen durchgeführt wird.

6. Verfahren nach einem der Ansprüche 1 bis 5,
**dadurch gekennzeichnet, dass** das zweite Substrat nach dem Tempern und Erkalten des glasartigen Substrates vom ersten Substrat getrennt wird.

7. Verfahren nach einem der Ansprüche 1 bis 6,
**dadurch gekennzeichnet, dass** das Abtrennen des zweiten Substrats vom ersten Substrat durch Wegätzen des ersten Substrates erfolgt.

8. Verfahren nach einem der Ansprüche 1 bis 7,
**dadurch gekennzeichnet, dass** das Abtrennen des zweiten Substrates vom ersten Substrat durch Vorsehen einer Trennschicht zwischen dem ersten und zweiten Substrat erfolgt, die vor dem Zusammenführen beider Substrate auf der strukturierten Oberfläche strukturerhaltend aufgebracht wird und als Opferschicht ausgebildet ist, die im Wege thermischer und/oder chemischer Einwirkung zerstört wird und ein Trennen beider Substrate voneinander ermöglicht.

9. Verfahren nach einem der Ansprüche 1 bis 8,
**dadurch gekennzeichnet, dass** zwischen dem ersten und dem zweiten Substrat eine Metallschicht aufgebracht wird.

**10.** Verfahren nach Anspruch 9 und 10,
**dadurch gekennzeichnet, dass** die Metallschicht als Trennschicht eingesetzt wird, die einen Schmelzpunkt aufweist, der unterhalb der Schmelzpunkte der Substrate liegt.

**11.** Verfahren nach einem der Ansprüche 1 bis 10,
**dadurch gekennzeichnet, dass** die strukturierte Oberfläche des ersten Substrates Vertiefungen mit Strukturbreiten B und das zweite Substrat eine Dicke D aufweist und dass in etwa gilt:

$$B < 0,5 \cdot D$$

**12.** Verfahren nach einem der Ansprüche 1 bis 11,
**dadurch gekennzeichnet, dass** es sich bei dem ersten Substrat um ein Halbleitersubstrat und/oder, dass es sich bei dem glasartigen Material um ein Bor-Silikat-Glas handelt.

**13.** Verfahren nach Anspruch 12,
**dadurch gekennzeichnet, dass** es sich bei dem Halbleitersubstrat um ein Siliziumsubstrat und/oder, dass es sich bei dem Bor-Silikat-Glas um Pyrex®-Glas oder Borofloatglas® handelt.

**14.** Verfahren nach einem der Ansprüche 1 bis 11,
**dadurch gekennzeichnet, dass** es sich bei dem ersten Substrat um ein Halbleitersubstrat und/oder, dass es sich bei dem glasartigen Material um ein auf Polymerbasis beruhendes Kunststoffmaterial handelt.

**15.** Verfahren nach einem der Ansprüche 1 bis 14,
**dadurch gekennzeichnet, dass** die Verbindung des ersten Substrats mit dem zweiten Substrat aus glasartigem Material durch anodisches Bonden oder mittels Klebetechnik erfolgt.

**16.** Verfahren nach einem der Ansprüche 1 bis 15,
**dadurch gekennzeichnet, dass** der Temperprozess durch Steuerung der Temperatur und der Dauer für ein Erreichen einer bestimmten Krümmung der sich ausbildenden Mikrolinsenoberfläche ausgeführt wird.

**17.** Verfahren nach mindestens einem der Ansprüche 1 bis 16,
**dadurch gekennzeichnet, dass** nach dem Tempern oder nach dem Wegätzen des ersten Substrates eine Oberfläche des Glassubstrates durch Schleifen und/oder Polieren planiert wird.

**18.** Verfahren nach einem der Ansprüche 1 bis 17,
**dadurch gekennzeichnet, dass** vor dem Tempervorgang auf einer dem ersten Substrat abgewandten Seite des zweiten Substrats ein drittes Substrat aufgebracht wird, und
dass das dritte Substrat wenigstens eine Vertiefung oder wenigstens eine Öffnung mit einer Begrenzungskontur aufweist, durch die die Umfangskontur der sich ausbildenden Mikrolinse begrenzt wird.

**19.** Verfahren nach Anspruch 18,
**dadurch gekennzeichnet, dass** das dritte Substrat ein Halbleitersubstrat ist, vorzugsweise in Form eines Siliziumsubstrats.

**20.** Verfahren nach Anspruch 18 oder 19,
**dadurch gekennzeichnet, dass** nach dem Tempervorgang das dritte Substrat mittels Ätzverfahren entfernt wird.

**21.** Verfahren nach Anspruch 20,
**dadurch gekennzeichnet, dass** zwischen dem dritten und dem zweiten Substrat Massnahmen entsprechend einem der Ansprüche 7 bis 11 getroffen werden.

**22.** Verwendung der Mikrolinsen oder des Mikrolinsenarrays, die bzw. das nach dem Verfahren nach einem der Ansprüche 1 bis 22 herstellbar sind/ist als Urformen oder Masterformen zur Herstellung von Replikationsformen.

**23.** Verwendung nach Anspruch 22,
**dadurch gekennzeichnet, dass** die aus dem glasartigen Material bestehenden Mikrolinsen oder das Mikrolinsenarray zur Abformung der Mikrolinsenoberfläche in ein Substrat, vorzugsweise in ein Polymersubstrat verwendet wird.

**Claims**

**1.** A method for producing single microlenses or an array of microlenses composed of a glass-type material, in which method a first substrate is provided with a surface containing impressions over which a second substrate composed of a glass-type material is placed at least partially overlapping it and is joined therewith under vacuum conditions, and in which method the substrate composite is tempered in such a manner that the second substrate softens and flows into the impressions of the first substrate, thereby structuring the side of the second substrate facing away from the first substrate in order to form at least one microlens surface, wherein for forming the at least one microlens surface, the softened glass-type material of the second substrate flows into at least two impressions of the first substrate, the shape, size and arrangements of the two impression determining the curvature of the forming microlens surface.

2. A method according to claim 1,
wherein a first substrate is provided containing a first impression into which said softened glass-type material flows during the tempering process to form a concave surface contour at the microlens surface opposite the first substrate and
wherein provided beside the first impression and separated by an intermediate fillet is a second impression into which a amount, which is determinable, of the softened glass-type material flows determined by the shape, size and arrangement of the second impression to form a prescribed curvature of the microlens surface in at least a subdomain of the concave surface contour.

3. A method according to claim 1,
wherein a first substrate is provided which, containing at least two impressions separated by an intermediate fillet area over which a convex surface contour forms at the microlens surface opposite the first substrate due to the lateral flowing off of the softened material into the at least two impressions during the tempering process.

4. A method for producing single microlenses or an array of microlenses composed of a glass-type material, in which method a first substrate is provided with a surface containing impressions over which a second substrate composed of a glass-type material is placed at least partially overlapping it and is joined therewith, with a gaseous medium being enclosed in the impressions between the first and said second substrate and in which method the substrate composite is tempered in such a manner that the second substrate softens and is displaced by the gaseous medium expanding in the area of the impressions thereby structuring the side of the second substrate facing away from the first substrate to form at least one convex microlens surface,
wherein a first substrate is provided having a first impression which encloses with the second substrate a first cavity with the second substrate in which the gaseous medium is enclosed which expands during tempering and displaces the softened glass-type material to form a convex surface contour on the microlens surface lying opposite the first substrate, and
wherein on the first substrate at least one second impression is provided separated by an intermediate fillet next to the first impression, the at least one second impression enclosing with the second substrate a second cavity in which the gaseous medium is enclosed which expands during tempering and displaces the softened glass-type material to form a curvature, which can be prescribed, of the microlens surface at least in a subdomain of the convex surface contour.

5. A method according to claim 4,
wherein joining the second substrate with the first substrate occurs under normal or high pressure conditions.

6. A method according to one of the claims 1 to 5,
wherein after tempering and cooling of the glass-type substrate, the second substrate is separated from the first substrate.

7. A method according to one of the claims 1 to 6,
wherein separation of the second substrate from the first substrate occurs by means of etching away the first substrate.

8. A method according to one of the claims 1 to 6,
wherein separation of the second substrate from the first substrate occurs by providing a separation layer between the first substrate and the second substrate, the separation layer being applied in the form of a sacrificial layer on the structured surface in a structure retaining manner before joining the two substrates, the sacrificial layer being destroyed by means of thermal and/or chemical action and permitting separation of the two substrates.

9. A method according to one of the claims 1 to 8,
wherein a metal layer is placed between the first and the second substrate.

10. A method according to claim 9,
wherein said metal layer is utilized as a separation layer which has a melting point below the melting points of the substrates.

11. A method according to one of the claims 1 to 10,
wherein the structured surface of the first substrate is provided with impressions having structure widths B and the second substrate having a thickness D and wherein the following applies approximately:

$$B < 0.5 * D$$

12. A method according to one of the claims 1 to 11,
wherein the first substrate is a semiconductor substrate and/or
wherein the glass-type material is a borosilicate glass.

13. A method according to claim 12,
wherein the semiconductor substrate is a silicon substrate and/or
wherein the borosilicate glass is Pyrex® glass or
Borofloat glass®.

14. A method according to one of the claims 1 to 11, wherein the first substrate is a semiconductor substrate and/or
wherein the glass-type material is a polymer-based plastic material.

15. A method according to one of the claims 1 to 14, wherein joining of the first substrate with the second substrate composed of a glass-type material occurs by means of anodic bonding or by means of a gluing method.

16. A method according to one of the claims 1 to 15, wherein the tempering process is conducted by means of controlling the temperature and the duration to obtain a certain curvature of the forming microlens surface.

17. A method according to one of the claims 1 to 16, wherein after the tempering process or after the etching away of the first substrate, a surface of the glass substrate is planed by means of grinding and/or polishing.

18. A method according to one of the claims 1 to 17, wherein before the tempering process, a third substrate is placed on the side of the second substrate facing away from said first substrate, and
wherein the third substrate is provided with at least one impression or at least one opening having a delimiting contour, which delimits the peripheral contour of the forming microlens.

19. A method according to claim 18,
wherein the third substrate is a semiconductor substrate, preferably in the form of a silicon substrate.

20. A method according to claim 18 or 19,
wherein after the tempering process, the third substrate is removed by means of an etching process.

21. A method according to claim 20,
wherein between the third and the second substrate measures according to one of the claims 7 to 11 are carried out.

22. Use of the microlenses or the array of microlenses producible according to the method according to one of the claims 1 to 21 as original molds or master molds for producing replication molds.

23. Use according to claim 22,
wherein the microlenses or the array of microlenses composed of the glass-type material is/are used to mold the microlens surface in a substrate, preferably in a polymer substrate.

**Revendications**

1. Procédé de fabrication de microlentilles individuelles ou d'une rangée de microlentilles en matière vitreuse, dans lequel on met à disposition un premier substrat avec une surface munie de creux, sur laquelle on fait coïncider un deuxième substrat consistant dans la matière vitreuse, de façon à le faire chevaucher au moins partiellement et on le relie à ce dernier sous des conditions de vide, et dans lequel on soumet l'ensemble de substrats à une trempe de façon telle, que le deuxième substrat ramollisse et s'écoule dans les creux du premier substrat, ce qui a pour effet de structurer le côté du deuxième substrat qui est opposé au premier substrat, pour créer au moins une surface de microlentille,
**caractérisé en ce que** pour concevoir la au moins une surface de microlentille, la matière vitreuse ramollie du premier substrat coule dans au moins deux creux du premier substrat, dont la forme, la dimension et l'agencement déterminent la courbure de la surface de microlentille qui s'établit.

2. Procédé selon la revendication 1,
**caractérisé en ce qu'**on met à disposition un premier substrat qui prévoit un premier creux dans lequel la matière vitreuse ramollie s'écoule pendant la trempe, pour créer un contour superficiel concave sur la surface de la microlentille qui est opposée au premier substrat, et **en ce que** séparé par une nervure intermédiaire, on a prévu à côté du premier creux au moins un deuxième creux dans le premier substrat, dans lequel s'écoule dans au moins une zone partielle du contour superficiel concave une quantité de matière vitreuse ramollie pouvant être déterminée par la forme, la dimension et l'agencement du deuxième creux, pour créer une courbure prédéfinissable de la surface de la microlentille.

3. Procédé selon la revendication 1,
**caractérisé en ce qu'**on met à disposition un premier substrat qui prévoit au moins deux creux que l'on sépare par une zone de nervures intermédiaires, au-dessus de laquelle, par écoulement latéral de la matière ramollie pendant la trempe dans les aux moins deux creux s'établit un contour superficiel convexe sur la surface de la microlentille qui est opposée au premier substrat.

4. Procédé de fabrication de microlentilles individuelles ou d'une rangée de microlentilles en matière vitreuse, dans lequel on met à disposition un premier substrat avec une surface munie de creux, sur laquelle on fait coïncider un deuxième substrat consistant dans la matière vitreuse, de façon à le faire chevaucher au moins partiellement et on le relie à ce dernier sous inclusion respective dans les creux entre le premier et le deuxième substrat d'un fluide gazeux, et dans lequel on soumet l'ensemble de substrats à une trempe de façon telle, que le deuxième substrat ramollisse et sous l'effet du fluide gazeux en expansion soit refoulé respectivement dans la zone des creux, ce qui a pour effet de structurer le côté du deuxième substrat qui est opposé au premier substrat, pour créer au moins une surface de microlentille, **caractérisé en ce qu'**on met à disposition un premier substrat, qui prévoit un premier creux, qui avec le deuxième substrat inclut une première cavité, dans laquelle est inclus un fluide gazeux, qui pendant la trempe subit une expansion et refoule la matière vitreuse ramollie pour créer un contour superficiel convexe sur la surface de microlentille qui est opposée au premier substrat, et

**en ce que** séparé par une nervure intermédiaire, on a prévu à côté du premier creux au moins un deuxième creux sur le premier substrat, qui avec le deuxième substrat inclut une deuxième cavité, dans laquelle est inclus un fluide gazeux, qui pendant la trempe subit une expansion et refoule la matière vitreuse ramollie au moins dans une zone partielle du contour superficiel convexe, pour créer une courbure prédéfinissable de la surface de microlentille.

5. Procédé selon la revendication 4,
   **caractérisé en ce qu'**on procède à la liaison du deuxième substrat avec le premier substrat sous des conditions normales ou sous des conditions de surpression.

6. Procédé selon l'une quelconque des revendications 1 à 5,
   **caractérisé en ce qu'**après la trempe et le refroidissement du substrat vitreux, on sépare le deuxième substrat du premier substrat.

7. Procédé selon l'une quelconque des revendications 1 à 6,
   **caractérisé en ce que** la séparation du deuxième substrat du premier substrat est assurée par décapage du premier substrat.

8. Procédé selon l'une quelconque des revendications 1 à 7,
   **caractérisé en ce que** la séparation du deuxième substrat du premier substrat est assurée **en ce qu'**on prévoit une couche de séparation entre le premier et le deuxième substrat, que l'on applique sur la surface structurée avant l'assemblage des deux substrats, de façon à préserver la structure et **en ce qu'**on la conçoit en tant que couche sacrificielle, que l'on détruit par effet thermique et/ou chimique et qui permet une séparation réciproque des deux substrats.

9. Procédé selon l'une quelconque des revendications 1 à 8,
   **caractérisé en ce qu'**on applique une couche métallique entre le premier et le deuxième substrat.

10. Procédé selon la revendication 9 et 10,
    **caractérisé en ce qu'**on utilise la couche métallique en tant que couche de séparation, présentant un point de fusion qui est inférieur aux points de fusion des substrats.

11. Procédé selon l'une quelconque des revendications 1 à 10,
    **caractérisé en ce que** la surface structurée du premier substrat comporte des creux avec des largeurs de structures B et **en ce que** le deuxième substrat présente une épaisseur D et qu'on applique approximativement :

$$B < 0,5 \cdot D$$

12. Procédé selon l'une quelconque des revendications 1 à 11,
    **caractérisé en ce que** le premier substrat est un substrat semi-conducteur et/ou **en ce que** la matière vitreuse est un verre au borosilicate.

13. Procédé selon la revendication 12,
    **caractérisé en ce que** le premier substrat semi-conducteur est un substrat de silicium et/ou **en ce que** le verre au borosilicate est un verre Pyrex® ou un verre Borofloat®.

14. Procédé selon l'une quelconque des revendications 1 à 11,
    **caractérisé en ce que** le premier substrat est un substrat semi-conducteur et/ou **en ce que** la matière vitreuse est une matière plastique sur base polymère.

15. Procédé selon l'une quelconque des revendications 1 à 14,
    **caractérisé en ce que** la liaison entre le premier substrat et le deuxième substrat en matière vitreuse est assurée par métallisation anodique ou au moyen d'une technique de collage.

16. Procédé selon l'une quelconque des revendications 1 à 15,
    **caractérisé en ce que** le processus de trempe est réalisé par contrôle de la température et de la durée pour obtenir une courbure déterminée de la surface de microlentille qui se forme.

17. Procédé selon au moins l'une quelconque des revendications 1 à 16,

**caractérisé en ce qu'**après la trempe ou après le décapage du premier substrat, on aplanit une surface du substrat en verre par ponçage ou par polissage.

18. Procédé selon l'une quelconque des revendications 1 à 17,
**caractérisé en ce qu'**avant le processus de trempe, on applique sur un côté du deuxième substrat qui est opposé au premier substrat un troisième substrat et que le troisième substrat comporte au moins un creux ou au moins une ouverture avec un contour de délimitation, qui délimite la contour périphérique de la microlentille qui se forme.

19. Procédé selon la revendication 18,
**caractérisé en ce que** le troisième substrat est un substrat semi-conducteur, de préférence sous la forme d'un substrat de silicium.

20. Procédé selon la revendication 18 ou 19,
**caractérisé en ce qu'**après le processus de trempe, on retire le troisième substrat par procédé de décapage.

21. Procédé selon la revendication 20,
**caractérisé en ce qu'**entre le troisième et le deuxième substrat, on applique des mesures correspondant à l'une quelconque des revendications 7 à 11.

22. Utilisation des microlentilles ou des rangées de microlentilles pouvant être fabriquées d'après le procédé selon l'une quelconque des revendications 1 à 22 en tant que moules primaires ou moules maîtres pour la fabrication de moules de réplication.

23. Utilisation selon la revendication 22,
**caractérisée en ce qu'**on utilise les microlentilles ou la rangée de microlentilles pour le moulage de la surface de microlentilles dans un substrat, de préférence dans un substrat de polymère.

**Fig. 1**

Si-Wafer 2

6

Glas    4

1

Si-Wafer 1

a)

Si-Wafer 2

Glas

Si-Waf

b)

Fig. 2

Si-Wafer 2

Glas

Si-Wafer 1

**Fig. 3**

Si-Wafer 2    6

Glas    4

8

Si-Wafer 1    1

**a)**

7

Si-Wafer 2    7

Glas

9    8    9

Si-Wafer 1    2    K1    K2    K3

**b)**

**Fig. 4**

**Si-Wafer 2**

**6**

**Glas** **4**

**8**

**Si-Wafer 1** **9**

**1**

**Fig. 5**

**Fig. 6**

**Fig. 7**